# EUROPÄISCHE PATENTSCHRIFT

(11) **EP 0 551 054 B1**
(45) Veröffentlichungstag und Bekanntmachung des Hinweises auf die Patenterteilung: **15.05.1996**
(21) Anmeldenummer: 92810987.5
(22) Anmeldetag: 11.12.1992
(51) Int. Cl.: H01M 8/24, H01M 8/06

(54) **Zentralsymmetrische Brennstoffzellenbatterie**
Centrally symmetric fuel cell battery
Pile à combustible à symétrie axiale

(30) Priorität: 09.01.1992 CH 42/92
(43) Veröffentlichungstag der Anmeldung: 14.07.1993
(73) Patentinhaber: SULZER INNOTEC AG, CH-8401 Winterthur (CH)
(72) Erfinder: Barp, Bruno, CH-8964 Rudolfstetten (CH); Diethelm, Roland, CH-8494 Bauma (CH)
(74) Vertreter: Heubeck, Bernhard

(56) Entgegenhaltungen:
- EP-A- 0 437 175
- GB-A- 2 025 118
- PATENT ABSTRACTS OF JAPAN, Band 15, Nr. 54 (E-1031)(4582), 08 Februar 1991
- PATENT ABSTRACTS OF JAPAN, Band 12, Nr. 493 (E-697)(3340), 22 Dezember 1988
- PATENT ABSTRACTS OF JAPAN, Band 13, Nr. 114 (E-730)(3462), 20 März 1989

## Beschreibung

Die Erfindung betrifft eine Brennstoffzellenbatterie gemäss Oberbegriff von Anspruch 1. Der Brennstoff, im folgenden kurz Gas genannt, wird mit Brennstoff-Elektroden in Kontakt gebracht. Dabei gehört je nach Festlegung der Modulgrenzen die betreffende Brennstoff-Elektrode entweder der elektrochemisch aktiven Platte des gleichen Moduls, dem die zentrale Gaszuführung zugeordnet ist, oder aber jener eines benachbarten Moduls an. Ist durch die gasdichte Trennwand die Begrenzung des Moduls gegeben, so kann diese Wand aus zwei parallelen Platten bestehen, wobei die eine der Platten den Abschluss eines Moduls und die andere jenen eines benachbarten Moduls bildet. Die elektrochemisch aktive Platte besteht aus drei Schichten, nämlich einer positiven Elektrode (Luftseite), einem Feststoff-Elektrolyten und einer negativen Elektrode (Gasseite). Diese Struktur hat den Namen "PEN" erhalten; diese Benennung für die elektrochemisch aktive Platte soll auch im folgenden verwendet werden.

Aus der CH-PS 678775 (oder EP-A-0437175) ist eine Brennstoffzellenbatterie bekannt, deren in Serie geschalteten Zellen oder Module einen zentralsymmetrischen Stapel bilden. Die Gaszuführung erfolgt über einen axialen Kanal, aus dem Verteilleitungen in die einzelnen Module münden. Zwischen benachbarten Modulen sind beim zentralen Gaskanal Dichtungsringe für die Separierung der Luft- und Gasräume vorgesehen. Die Luft, die vorerhitzt der Brennstoffzellenbatterie zugeführt wird, erwärmt sich noch zusätzlich in Wärmetauschern, die in den Modulen integriert sind. Diese internen Wärmetauscher bilden gleichzeitig die Mittel zum Führen der Luft von peripheren Einspeisestellen zum Zentrum des Moduls. Die Luft und das Gas werden beidseits des PEN im Gleichstrom geführt. Bei der beschriebenen Brennstoffzelle wird der interne Luftwärmetauscher im wesentlichen durch die gasdichte Trennwand und eine zu dieser Wand oder dem PEN parallelen Luftleitplatte gebildet. Im Raum zwischen Trennwand und Luftleitplatte strömt die eingespeiste Luft gegen die Modulmitte, wo Durchbrüche zum PEN angeordnet sind. Von diesen Durchbrüchen strömt dann die Luft entlang der Oberfläche des PEN wieder zurück zur Peripherie. Statt mittels Luftleitplatten kann die Luft auch mittels beispielsweise Rohren, die ebenfalls die Funktion von Wärmetauschern haben, zur Modulmitte transportiert werden.

An der Peripherie der Module vermischen sich die Luft, deren Sauerstoff nur teilweise verbraucht ist, und das Gas, das ebenfalls nicht vollständig beim elektrochemischen Prozess reagiert hat. Dieses Gemisch kann zur Erzeugung von Wärme, die für das Vorheizen der Luft verwendbar ist, verbrannt werden. Die Verbrennung kann unmittelbar an der Peripherie der Module oder aber auch in einem separaten Nachverbrenner stattfinden.

Ein Vorteil der zentralsymmetrischen Brennstoffzellen-Batterie ist, dass pro Modul nur eine Dichtung benötigt wird. Aber auch diese eine Dichtung bedeutet ein schwieriges Problem, für das noch keine befriedigende Lösung bekannt ist. Aufgabe der vorliegenden Erfindung ist es, eine zentralsymmetrische Brennstoffzellen-Batterie zu schaffen, bei der die Gas- und Lufträume im Zentrum zuverlässig voneinander separiert sind. Diese Aufgabe wird durch die kennzeichnenden Merkmale von Anspruch 1 gelöst.

Dank dieser Lösung ist überhaupt keine Dichtung für einen Gaskanal mehr nötig.

Durch diese Lösung fällt auch eine weitere Schwierigkeit weg, die mit der Herstellung der PEN zusammenhängt. Es hat sich gezeigt, dass wenn die PEN als Ringscheiben ausgebildet werden, leicht Risse an deren inneren Rand auftreten. Bei PEN ohne Durchbrüche tritt die Rissbildung nicht auf.

Es bestehen gemäss den abhängigen Ansprüchen 2 bis 5 verschiedene Möglichkeiten, die Gaszuleitungen nach der Lehre der Erfindung auszuführen. Es ist überdies möglich, diese Gaszuleitungen mit einem Katalysator zwecks "Reforming" zu kombinieren (Ansprüche 6 und 7). Beim "Reforming" wird in einem endothermen Prozess Methan zusammen mit dampfförmigem Wasser oder zusammen mit einem Gemisch von Wasser und Kohlendioxid katalytisch zu Wasserstoff und Kohlenmonoxid umgewandelt. Statt Methan kann auch Erdgas verwendet werden, das zur Hauptsache aus Methan besteht.

Nachfolgend wird die Erfindung im Zusammenhang mit Zeichnungen näher erläutert. Es zeigen:
- Fig. 1: einen Modul einer bekannten Brennstoffzellen-Batterie,
- Fig. 2: die gasdichte Trennwand eines erfindungsgemässen Moduls für ein erstes Ausführungsbeispiel,
- Fig. 3: einen Querschnitt durch einen Modul für ein zweites Ausführungsbeispiel der Erfindung und
- Fig. 4: einen Querschnitt durch einen Modul, bei dem die erfindungsgemässe Gaszuleitung mit einem Katalysator kombiniert ist.

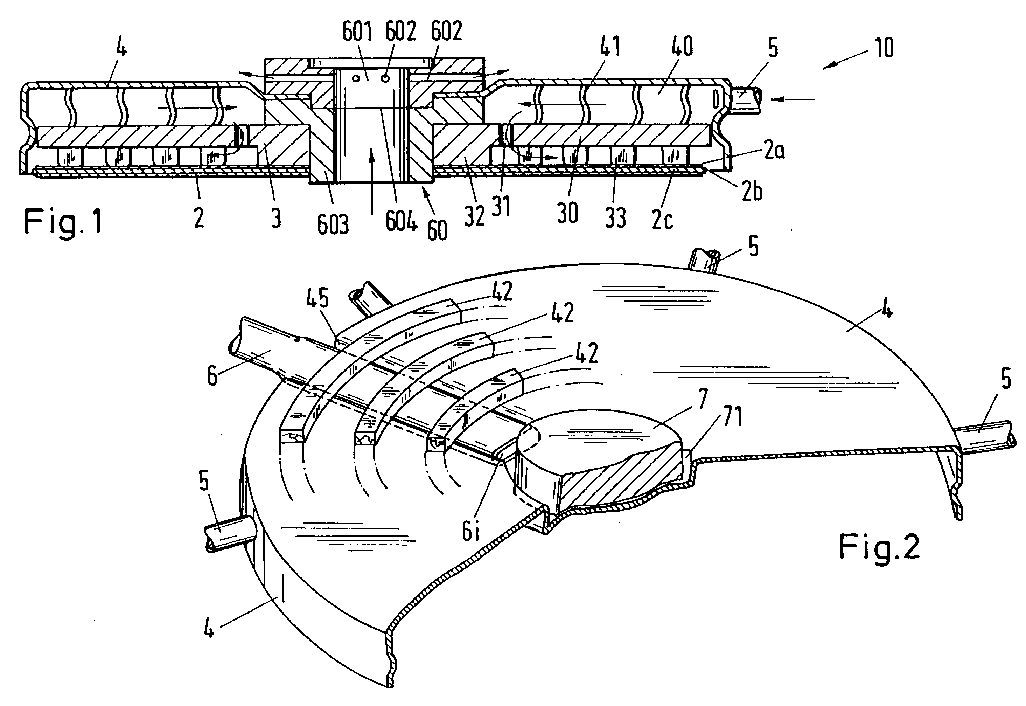

Der bekannte Modul 10 der Fig.1 zeigt folgende Komponenten: den PEN 2, den "Interkonnektor" 3, die gasdichte Trennwand 4, eine periphere Lufteinspeisestelle 5 und den zentralen Gaskanal 60. Der Gaskanal setzt sich aus Elementen 601 und 603 zusammen, die an der Stossstelle 604 dicht aufeinander passen. Das Element 601 mit den Verteilleitungen 602 bildet die zentrale Zuführstelle für den Brennstoff. Der PEN mit der Luftelektrode 2a, mit dem Elektrolyt 2b und der Gaselektrode 2c ist mit dem aus einem keramischen, elektrisch leitenden Werkstoff gefertigten Interkonnektor 3 zusammengesintert. Der Interkonnektor 3 weist einen Aufbau auf bestehend aus einer zusammenhängenden Schicht 30 mit Durchbrüchen 31 im zentralen Bereich, mit einem zentralen Ring 32 als innern Abschluss und mit noppenartigen Verbindungselementen 33 zwischen der Schicht 30 und dem PEN 2. Die Schicht 30 hat die Funktion der Luftleitplatte der aus der CH-PS 678775 bekannten Brennstoffzelle. Der Luftraum 40 zwischen Interkonnektor 3 und Trennwand 4 wird durch elektrische Leiter 41 überbrückt. Auch zwischen der Trennwand 4 und dem PEN des nicht dargestellten benachbarten Moduls sind elektrische Leiter vorgesehen, die ebenfalls nicht dargestellt sind.

Die an der Stelle 5 eingespeiste Luft strömt im Raum 40 unter Wärmeaufnahme zur Modulmitte und gelangt anschliessend über die Durchbrüche 31 zum PEN, wo sie beim Zurückströmen zur Peripherie den Sauerstoff für die elektrochemische Reaktion liefert. Das Gas strömt auf der anderen Seite des PEN parallel zur Luft unter teilweiser Umwandlung in die Abgaskomponenten Wasser und Kohlendioxid und vermischt sich schliesslich an der Peripherie mit der Luft, deren Sauerstoff auch nur teilweise verbraucht worden ist.

In der Fig.2, die sich auf eine erfindungsgemässe Brennstoffzelle bezieht, ist angedeutet, wie die elektrischen Leiter 42 zwischen Trennwand 4 und benachbartem Modul ausgebildet sein können: Es handelt sich dabei um geschlossene Ringe, die aus einem gasdurchlässigen, metallischen Filz hergestellt sind.

Beim ersten Ausführungsbeispiel der Erfindung (Fig.2) wird das Gas über eine radiale Leitung 6 von der Peripherie des Moduls zur Austrittsöffnung 6i in der Modulmitte transportiert. Dort im Zentrum befinden sich nun anstelle des axialen Gaskanals Abstandhalter 7, die beispielsweise aus Keramik gefertigt sind. Damit der Abstand zwischen der Trennwand 4 und dem PEN des benachbarten Moduls minimal gehalten werden kann, ist in der Trennwand eine nutartige Vertiefung 45 für das Brennstoff-Rohr 6 vorgesehen. Dieses Zuführelement 6 für den Brennstoff ist radial in den Modul einschiebbar. Das durch das Zuführelement 6 in den Modul einströmende Gas wird über den zentralen Ringkanal 71 in den Gasraum verteilt. Die Filzringe 42 sorgen dank ihrer strömungsdrosselnden Wirkung für eine gleichmässige Gasverteilung.

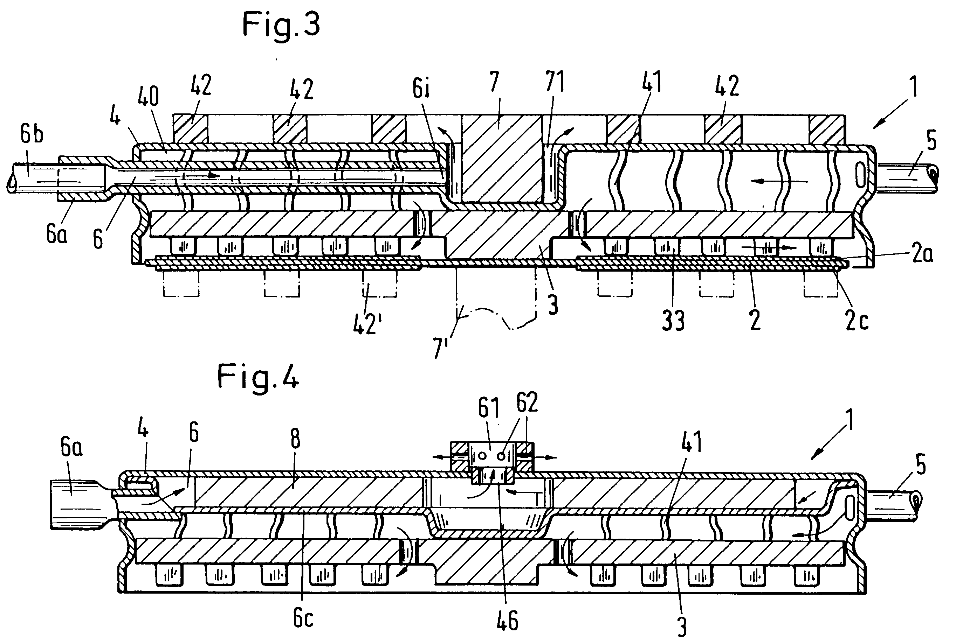

Die Fig.3 mit dem zweiten erfindungsgemässen Ausführungsbeispiel zeigt folgende Komponenten des Moduls 1: den PEN 2 mit den beiden Elektroden 2a und 2c, den Interkonnektor 3 mit den stromleitenden Elementen 33, die gasdichte Trennwand 4 mit drahtförmigen beziehungsweise filzartigen Stromleitern 41 und 42, eine Lufteinspeisestelle 5, das Gaszuführelement 6 und den zentralen Abstandhalter 7, der zusammen mit einer topfförmigen Vertiefung der Trennwand 4 einen Ringkanal 71 bildet. Für einen benachbarten Modul sind strichpunktiert die filzartigen Stromleiter 42' und der Abstandhalter 7' angedeutet. Bei diesem zweiten Ausführungsbeispiel ist das Zuführelement 6 für den Brennstoff in den Modul fest integriert, und es weist an der Peripherie des Moduls eine Kuppelstelle 6a für ein Verbindungsrohr 6b zu einem nicht dargestellten Gasverteiler auf. Das Zuführelement 6 ist im Luftraum 40 angeordnet; seine zentrale Mündung 6i beim Ringkanal 71 ist dicht in die Trennwand 4 eingesetzt.

Wie bereits eingangs erwähnt kann die Begrenzung des Moduls auch anders gewählt werden. So können beispielsweise die einen gasseitigen Stromleiter 42' fest mit dem PEN verbunden sein, während die anderen gasseitigen Stromleiter 42 zum benachbarten Modul gehören und nur durch Anpressen mit der gasdichten Wand 4 in elektrischen Kontakt gebracht werden.

Bei der Brennstoffzelle in Fig.4 ist das Zuführelement 6 für den Brennstoff als Behälter ausgebildet, in welchem auf einem porösen Körper 8 sich ein Stoff mit katalytischer Wirkung, beispielsweise Nickel, für das oben erwähnte Reforming befindet. Die Wandung des Behälters wird durch die Trennwand 4 und eine zweite Wand 6c gebildet. Wie schon beim zweiten Ausführungsbeispiel ist auch hier eine Kuppelstelle 6a für einen Gasverteiler vorgesehen. Nach dem Reforming gelangt der Brennstoff über eine zentrale Öffnung 46 in den Verteiler 61 mit den Kanälen 62. Dieser Verteiler 61 übernimmt auch die Funktion des Abstandhalters 7. In Fig.4 ist der Interkonnektor 3 ohne PEN und ohne Stromleiter 42 dargestellt. Die Stromleiter 41 verbinden hier den Interkonnektor 3 mit der zweiten Wand 6c des Katalysatorbehälters.

Da das Reforming innerhalb der Brennstoffzelle stattfindet, kann die bei diesem Prozess benötigte Energie durch Wärmeleitung direkt vom PEN geliefert werden, wo beim elektrochemischen Prozess neben der elektrischen Energie auch thermodynamisch hochwertige Wärmeenergie freigesetzt wird.

Bei den oben beschriebenen Ausführungsbeispielen sind die zentralen Zuführstellen für das Gas jeweils in Kombination mit Abstandshalter der Module dargestellt. Solche Abstandhalter können beispielsweise auch durch Elemente an der Peripherie gebildet werden. In diesem Fall kann die zentrale Zuführstelle beispielsweise lediglich aus der Austrittsöffnung 6i des Zuführelements 6 (Fig.2, Fig.3) und der topfartigen Vertiefung ohne den Abstandhalter 7 bestehen. Es ist beispielsweise auch möglich, das Zuführelement 6 mit einem gekrümmten Ende zu versehen, sodass die Austrittsöffnung 6i parallel zum PEN gerichtet ist; auf die topfartige Vertiefung in der Modulmitte kann dann verzichtet werden. Bei diesen Fällen ohne zentrale Abstandshalter besteht die zentrale Zuführstelle im wesentlichen lediglich aus der Austrittsöffnung 6i des Zuführelements 6.

## Patentansprüche

1. Brennstoffzellenbatterie mit stapelartig angeordneten Modulen (1), wobei ein Modul jeweils
eine zentralsymmetrische, elektrochemisch aktive, aus einem oxydionenleitenden Feststoffelektrolyten (2b) und zwei Elektroden (2a,2c) bestehende Platte (2), eine gasdichte Trennwand (4) zwischen einem Luft- und einem Brennstoffraum,
Mittel (3) zum Führen von Luft von mindestens einer peripheren Einspeisestelle (5) zum Zentrum des Moduls, wo die Luft mit der elektrochemisch aktiven Platten in Kontakt tritt,
und eine zentrale Zuführstelle (71; 61) für einen gasförmigen Brennstoff aufweist,
dadurch gekennzeichnet, dass die elektrochemisch aktiven Platten (2) keine Durchbrüche aufweisen und dass für den Brennstoff Zuführelemente (6) vorgesehen sind, durch welche für jeden Modul (1) der Brennstoff von mindestens einer Einspeisestelle an der Peripherie des Moduls zur zentralen Zuführstelle (71; 61) transportierbar ist.

2. Brennstoffzellenbatterie nach Anspruch 1, dadurch gekennzeichnet, dass das Zuführelement (6) für den Brennstoff ein radial in den Modul einschiebbares Rohr ist.

3. Brennstoffzellenbatterie nach Anspruch 2, dadurch gekennzeichnet, dass die gasdichte Trennwand (4) auf der Seite des Gasraumes eine radiale nutartige Vertiefung (45) für das Brennstoff-Rohr aufweist.

4. Brennstoffzellenbatterie nach Anspruch 1, dadurch gekennzeichnet, dass das Zuführelement (6) für den Brennstoff in den Modul fest integriert ist und an der Peripherie des Moduls eine Kuppelstelle (6a) für einen Gasverteiler aufweist.

5. Brennstoffzellenbatterie nach Anspruch 4, dadurch gekennzeichnet, dass das Zuführelement (6) für den Brennstoff im Luftraum (40) angeordnet ist.

6. Brennstoffzellenbatterie nach den Ansprüchen 1 bis 5, dadurch gekennzeichnet, dass die zentrale Zuführstelle im wesentlichen aus der Austrittsöffnung (6i) des Zuführelements (6) besteht.

7. Brennstoffzellenbatterie nach den Ansprüchen 1 bis 6, dadurch gekennzeichnet, dass das Zuführelement (6) für den Brennstoff als Behälter mit einem Katalysator (8) ausgebildet ist, durch den ein Gemisch von Methan und Wasserdampf oder ein Gemisch von Methan, Wasserdampf und Kohlendioxid zu Wasserstoff und Kohlenmonoxid umsetzbar ist.

8. Brennstoffzellenbatterie nach Anspruch 4, dadurch gekennzeichnet, dass die Wandung des Behälters mit dem Katalysator (8) im wesentlichen durch die gasdichte Trennwand (4) und einer zweiten Wand (6c) gebildet wird.

## Claims

1. Fuel cell battery with modules (1) disposed in the manner of a stack, each module comprising a centrally symmetrical, electrochemically active plate (2), which consists of an oxide ion-conducting solid electrolyte (2b) and two electrodes (2a, 2c), a gas-tight partition wall (4) between an air space and a fuel space, means (3) for conveying air from at least one peripheral feed point (5) to the centre of the module, where the air comes into contact with the electrochemically active plates, and a central supply point (71; 61) for a gaseous fuel, characterised in that the electrochemically active plates (2) do not comprise any openings, and that supply members (6) are provided for the fuel, through which members the fuel can be conveyed from at least one feed point at the periphery of the module to the central supply point (71; 61) for each module (1).

2. Fuel cell battery according to claim 1, characterised in that the supply member (6) for the fuel is a pipe which can be radially inserted in the module.

3. Fuel cell battery according to claim 2, characterised in that the gas-tight partition wall (4) comprises a radial, groove-like recess (45) for the fuel pipe on the gas space side.

4. Fuel cell battery according to claim 1, characterised in that the supply member (6) for the fuel is rigidly incorporated into the module and comprises at the periphery of the latter a coupling point (6a) for a gas distributor.

5. Fuel cell battery according to claim 4, characterised in that the supply member (6) for the fuel is disposed in the air space (40).

6. Fuel cell battery according to claims 1 to 5, characterised in that the central supply point basically consists of the outlet hole (6i) of the supply member (6).

7. Fuel cell battery according to claims 1 to 6, characterised in that the fuel supply member (6) is formed as a container with a catalyst (8), by means of which a mixture of methane and water vapour or a mixture of methane, water vapour and carbon dioxide can be converted into hydrogen and carbon monoxide.

8. Fuel cell battery according to claim 4, characterised in that the wall of the container with the catalyst (8) is essentially formed by the gas-tight partition wall (4) and a second wall (6c).

## Revendications

1. Pile à combustible comportant des modules (1) empilés, dans laquelle chaque module comporte une plaque (2) à symétrie centrale, active électrochimiquement, constituée d'un électrolyte solide (2b) conducteur d'ions oxyde et de deux électrodes (2a, 2c), une cloison (4) étanche aux gaz entre une chambre à air et une chambre à combustible, des moyens (3) de guidage de l'air à partir d'au moins un point d'alimentation périphérique (5) vers le centre du module, où l'air entre en contact avec la plaque active électrochimiquement, et un point d'arrivée central (71 ; 61) pour un combustible gazeux, caractérisée en ce que les plaques (2) actives électrochimiquement ne présentent aucun ajour et en ce que des éléments d'arrivée (6) sont prévus pour le combustible, à travers lesquels, pour chaque module (1), le combustible peut être transporté d'au moins un point d'alimentation à la périphérie du module vers le point d'arrivée central (71 ; 61).

2. Pile à combustible selon la revendication 1, caractérisée en ce que l'élément d'arrivée (6) du combustible est un tube pouvant être introduit radialement dans le module.

3. Pile à combustible selon la revendication 2, caractérisée en ce que la cloison (4) étanche aux gaz présente, sur le côté de la chambre à gaz, un creux (45) du type d'une rainure radiale pour le tube de combustible.

4. Pile à combustible selon la revendication 1, caractérisée en ce que l'élément d'arrivée (6) pour le combustible est intégré fixement dans le module et présente, à la périphérie du module, un point d'accouplement (6a) pour un distributeur de gaz.

5. Pile à combustible selon la revendication 4, caractérisée en ce que l'élément d'arrivée (6) du combustible est placé dans la chambre à air (40).

6. Pile à combustible selon les revendications 1 à 5, caractérisée en ce que le point d'arrivée central est essentiellement constitué de l'ouverture de sortie (6i) de l'élément d'arrivée (6).

7. Pile à combustible selon les revendications 1 à 6, caractérisée en ce que l'élément d'arrivée (6) du combustible est configuré en cuve avec un catalyseur (8) à travers lequel un mélange de méthane et de vapeur d'eau ou un mélange de méthane, de vapeur d'eau et de dioxyde de carbone est transformé en hydrogène et monoxyde de carbone.

8. Pile à combustible selon la revendication 4, caractérisée en ce que la paroi de la cuve avec le catalyseur (8) est essentiellement formée par la cloison (4) étanche aux gaz et par une seconde cloison (6c).
